# EUROPÄISCHE PATENTSCHRIFT

(11) **EP 1 001 192 B1**
(45) Veröffentlichungstag und Bekanntmachung des Hinweises auf die Patenterteilung: **24.09.2003**
(21) Anmeldenummer: 99120124.5
(22) Anmeldetag: 08.10.1999
(51) Int. Cl.: F16H 61/18

(54) **Verfahren beim Anwählen einer Gangstufe bei einem Automatikgetriebe**
Method for the selection of a ratio in an automatic transmission
Méthode pour sélectionner le rapport d'une boîte de vitesses automatique

(30) Priorität: 12.11.1998 DE 19852292
(43) Veröffentlichungstag der Anmeldung: 17.05.2000
(73) Patentinhaber: Bayerische Motoren Werke Aktiengesellschaft, 80809 München (DE)
(72) Erfinder: Neuner, Josef, 83064 Raubling (DE); Fürst, Sigmund, Dr., 82216 Maisach (DE); Ehrmaier, Rudolf, 81927 München (DE); Sedlmaier, Anette, 85777 Fahrenzhausen (DE)

(56) Entgegenhaltungen:
- EP-A- 0 681 120
- US-A- 4 419 909
- US-A- 5 211 082
- PATENT ABSTRACTS OF JAPAN vol. 018, no. 691 (M-1731), 26. Dezember 1994 (1994-12-26) -& JP 06 272757 A (TOYOTA MOTOR CORP), 27. September 1994 (1994-09-27)

## Beschreibung

Die Erfindung betrifft ein Verfahren beim Anwählen einer Gangstufe bei einem Automatikgetriebe gemäß dem Oberbegriff des Anspruchs 1 wie bekannt aus der US-5 211 082.

Herkömmlicherweise sind bei einem Automatikgetriebe verschiedene Fahrstufen vorgesehen. Darunter befinden sich verschiedene Vorwärtsfahrstufen und zumindest eine Rückwärtsfahrstufe. Bei einem Schaltvorgang von einer Vorwärtsfahrstufe, beispielsweise D, in eine Rückwärtsfahrstufe R sind Sicherungen eingebaut, damit eine Beschädigung des Getriebes beim Schalten bei einer zu hohen Fahrzeuggeschwindigkeit vermieden wird.

Herkömmlich wird bei einem solchen Schaltvorgang über einer bestimmten Geschwindigkeit der Schaltvorgang zunächst ignoriert. Fällt die Fahrzeuggeschwindigkeit dann unter die vorgegebene Grenzgeschwindigkeit, so erfolgt ein nachträgliches Einlegen der angewählten Fahrstufe. Dieses nachträgliche Einlegen der gespeicherten Fahrstufe könnte den Fahrer überraschen und zu einem unkomfortablen Einlegen des Ganges führen.

Aufgabe der Erfindung ist es daher, ein Verfahren anzugeben, das die obengenannten Auswirkungen bei Fehlbedienungen eines Automatikgetriebes vermeidet.

Diese Aufgabe wird durch die im Anspruch 1 genannten Merkmale gelöst.

Erfindungsgemäß wird der Schaltvorgang von einer Vorwärts- in eine Rückwärtsfahrstufe - und/oder wahlweise auch umgekehrt - bis zu einer bestimmten ersten Geschwindigkeit des Fahrzeugs von beispielsweise 2 bis 10 km/h durchgeführt. Liegt die Fahrzeuggeschwindigkeit jedoch in einem Geschwindigkeitsbereich zwischen der ersten und einer zweiten noch anzugebenden Geschwindigkeitsgrenze, so wird lediglich eine Neutralfahrstufe N eingelegt. Es wird kein weiterer Schaltvorgang gespeichert und die gerade angewählte Schaltstufe auch nicht später eingelegt. Der Fahrer muß dann bei einer Geschwindigkeit unter der ersten Geschwindigkeit die gewünschte Fahrstufe neu anwählen. Er kann auch die bisher eingelegte Fahrstufe bestätigen.

Bei einer Fahrzeuggeschwindigkeit über der zweiten Grenzgeschwindigkeit, die vorzugsweise zwischen 10 und 30 km/h liegt, wird der Schaltbefehl vollständig ignoriert. Vorzugsweise wird dies dem Fahrer optisch oder akustisch angezeigt.

Mit der vorgenannten Erfindung kann ein unerwartetes Schalten bei einem Fahrzeug vermieden, die Sicherheit gegen Fehlbedienungen und der Fahrkomfort erhöht werden.

## Patentansprüche

1. Verfahren beim Anwählen einer Gangstufe bei einem Fahrzeug-Automatikgetriebe mit zumindest einer Vorwärtsgangstufe und einer Rückwärtsgangstufe, bei dem bei bestimmten Betriebsbedingungen ein Schaltbefehl für einen Schaltvorgang von der Vorwärtsgangstufe in die Rückwärtsgangstufe oder umgekehrt ignoriert wird, wobei der Schaltvorgang bis zu einer bestimmten ersten Geschwindig keit des Fahrzeugs (v₁) durchgeführt wird, und der Schaltbefehl oberhalb einer zweiten Geschwindigkeit (v₂) ignoriert wird
**dadurch gekennzeichnet,**
**daß** in einem Geschwindigkeitsbereich des Fahrzeugs zwischen der ersten und der zweiten Geschwindigkeit (v₁<v<v₂) beim Schaltvorgang lediglich eine neutrale Gangstufe eingelegt wird.

2. Verfahren nach Anspruch 1,
**dadurch gekennzeichnet,**
**daß** der erste Geschwindigkeitsgrenzwert (v₁) zwischen 2 und 10 km/h und der zweite Geschwindigkeitsgrenzwert (v₂) zwischen 10 und 30 km/h liegt.

3. Verfahren nach Anspruch 1 oder 2,
**dadurch gekennzeichnet,**
**daß** das Ignorieren des Schaltbefehls angezeigt wird.

## Claims

1. A method of selecting a speed in an automatic gear unit of a vehicle comprising at least one forward gear and one reverse gear, wherein under certain operating conditions an instruction to shift from the forward gear to the reverse gear or vice versa is ignored, wherein the shift is carried out up to a given first speed of the vehicle (v₁) and the shift is ignored above a second speed (v₂), **characterised in that** only a neutral gear is engaged when the shift is made at a speed of the vehicle between the first and the second speed (v₁<v<v₂).

2. A method according to claim 1, **characterised in that** the first limiting speed (v₁) is between 2 and 10 km/h and the second limiting speed (v₂) is between 10 and 30 km/h.

3. A method according to claim 1 or 2, **characterised in that** the fact that the shift instruction has been ignored is displayed.

## Revendications

1. Procédé mis en oeuvre dans la sélection d'un étage de vitesse d'une boîte de vitesses automatique de véhicule, comprenant au moins un étage de vitesse de marche avant et un étage de vitesse de marche arrière, dans lequel, dans certaines conditions de fonctionnement, un ordre de changement pour une opération de changement passant de l'étage de vitesse de marche avant à l'étage de vitesse de marche arrière ou inversement est ignoré, l'opération de changement étant exécutée jusqu'à une certaine première vitesse du véhicule (v₁) et l'ordre de changement étant ignoré au-dessus d'une deuxième vitesse (v₂),
**caractérisé en ce que**
dans un intervalle de vitesse du véhicule compris entre la première vitesse et la deuxième vitesse (v₁<v<v₂), lors de l'opération de changement, seul un étage de rapport neutre est engagé.

2. Procédé selon la revendication 1,
**caractérisé en ce que**
la première valeur limite de vitesse (v₁) se trouve entre 2 et 10 km/h et la deuxième valeur limite de vitesse (v₂) se trouve entre 10 et 30 km/h.

3. Procédé selon la revendication 1 ou 2,
**caractérisé en ce qu'**
on signale le fait que l'ordre de changement est ignoré.
